# EUROPEAN PATENT APPLICATION

(11) **EP 4 797 037 A1**
(43) Date of publication of application: **26.08.2026**
(21) Application number: 24892767.5
(22) Date of filing: 18.06.2024
(51) Int. Cl.: G06F 1/03, G06N 3/048, G06N 3/063

(54) **DATA PROCESSING METHOD AND DATA PROCESSING APPARATUS**

(30) Priority: 20.11.2023 CN 202311554717
(71) Applicant: HUAWEI TECHNOLOGIES CO., LTD., Shenzhen 518129 (CN)
(72) Inventor: LUO, Yuanyong, Shenzhen, Guangdong 518129 (CN); DONG, Hongxi, Shenzhen, Guangdong 518129 (CN)
(74) Representative: Goddar, Heinz J.
(86) International application number: PCT/CN2024/099928
(87) International publication number: WO 2025/107602

(57) **Abstract**

Embodiments of this application relate to the field of chip technologies, and provide a data processing method and a data processing apparatus, to address low performance of a processor. A specific solution is as follows: A processor core obtains input data of an objective function through an input interface. The processor core determines, based on a first index and a second index, a polynomial coefficient corresponding to the input data. The processor core performs polynomial calculation based on a data bit and the polynomial coefficient to obtain output data of the objective function, and outputs the output data of the objective function through an output interface. Embodiments of this application are applied to a calculation process of the objective function.

## Description

This application claims priority to Chinese Patent Application No. 202311554717.6, filed with the China National Intellectual Property Administration on November 20, 2023 and entitled "DATA PROCESSING METHOD AND DATA PROCESSING APPARATUS", which is incorporated herein by reference in its entirety.

### TECHNICAL FIELD

Embodiments of this application relate to the field of chip technologies, and in particular, to a data processing method and a data processing apparatus.

### BACKGROUND

Nowadays, various implementations of artificial intelligence (artificial intelligence, AI) and machine learning are driving innovation in many technical fields. Mainstream neural networks such as a convolutional neural network and a recurrent neural network have achieved remarkable achievements in the fields of image classification, image processing, and the like.

In a current neural network system, a result of each layer of network needs to be processed by an activation function, to improve nonlinearity of a neural network model. Continuous development of the activation function is an important part of continuous improvement of the neural network system. However, a large quantity of parameters and a large amount of calculation are usually needed in the neural network system, and a nonlinear characteristic of the activation function leads to a performance bottleneck of a performance of a processor. Therefore, how to improve performance of a processor becomes an urgent problem to be resolved.

### SUMMARY

Embodiments of this application provide a data processing method and a data processing apparatus, to address low performance of a processor.

To achieve the foregoing objective, the following technical solutions are used in embodiments of this application.

According to a first aspect, an embodiment of this application provides a data processing method. The data processing method is applied to a data processing apparatus, and the data processing apparatus includes a processor core, an input interface, and an output interface. The method includes: The processor core obtains input data of an objective function through the input interface, where the objective function includes a plurality of first segment ranges, each first segment range includes a plurality of second segment ranges, the plurality of second segment ranges are in a one-to-one correspondence with a plurality of polynomial coefficients, the input data includes a first index, a second index, and a data bit, the first index corresponds to a first segment range to which the data bit belongs, the second index corresponds to a second segment range to which the data bit belongs, and a bit width of the second index is related to a slope of the objective function in the first segment range. The processor core determines, based on the first index and the second index, a polynomial coefficient corresponding to the data bit. The processor core performs polynomial calculation based on the data bit and the polynomial coefficient to obtain output data of the objective function, and outputs the output data of the objective function through the output interface.

In the data processing method provided in this embodiment of this application, secondary indexing is used. The processor core first determines, based on the first index, the first segment range to which the data bit belongs, where the first segment range may be understood as a coarse-grained segment. Then the processor core determines, based on the second index, the second segment range to which the data bit belongs, where the second segment range may be understood as a fine-grained segment. In addition, the bit width of the second index is related to the slope of the objective function in the first segment range. If the slope of the objective function in the first segment range is large, a second index with a large bit width may be used. If the slope of the objective function in the first segment range is small, a second index with a small bit width may be used. In this way, a quantity of segment ranges of the objective function can be reduced, to reduce storage space used to store the polynomial coefficient, and improve performance of the processor core. In addition, in the method provided in this embodiment of this application, uniform segmentation is performed, and no comparator needs to be used to obtain a segment range, so that design costs and a circuit area are further reduced.

In a possible design, that the processor core determines, based on the first index and the second index of the input data of the objective function, the polynomial coefficient corresponding to the data bit includes: The processor core determines, based on the first index, a lookup table whose lookup table identifier corresponds to the first index, where the lookup table stores a correspondence between a second segment range and a polynomial coefficient. The processor core determines, based on the second index, a polynomial coefficient that is in the lookup table and that corresponds to the second segment range indicated by the second index, and determines the polynomial coefficient as the polynomial coefficient corresponding to the data bit.

In this design, secondary indexing is used. The lookup table is first determined based on the first index, where the lookup table identifier is in a one-to-one correspondence with the first index, in other words, is in a one-to-one correspondence with the first segment range. Then the polynomial coefficient stored in the lookup table is determined based on the second index. Because the bit width of the second index is related to the slope of the objective function in the first segment range, a quantity of segments of the objective function can be reduced, to reduce storage space occupied by the lookup table, and improve performance of the processor core.

In a possible design, the polynomial coefficient includes a most significant field and a least significant field. If most significant fields of a plurality of polynomial coefficients are the same, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a least significant field of the polynomial coefficient is stored.

In this design, a partial storage mode in which same most significant bits in a same lookup table are omitted and only a least significant bit is stored is used, to further reduce storage space occupied by the lookup table, and improve performance of the processor core.

In a possible design, the polynomial coefficient includes a most significant field and a least significant field. If a difference between least significant fields of a plurality of polynomial coefficients is less than a threshold, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a most significant field of the polynomial coefficient is stored.

In this design, a partial storage mode in which a least significant bit meeting the threshold in a same lookup table is omitted and only a most significant bit is stored is used, to further reduce storage space occupied by the lookup table, and improve performance of the processor core.

In a possible design, the polynomial coefficient includes a most significant field, an intermediate significant field, and a least significant field. If most significant fields of a plurality of polynomial coefficients are the same and a difference between least significant fields of the plurality of polynomial coefficients is less than a threshold, when the lookup table stores a first polynomial coefficient of the plurality of polynomial coefficients, a most significant field, an intermediate significant field, and a least significant field of the first polynomial coefficient are stored, and when the lookup table stores a polynomial coefficient of the plurality of polynomial coefficients other than the first polynomial coefficient, an intermediate significant field of the polynomial coefficient is stored.

In this design, a partial storage mode in which same most significant bits and a least significant bit meeting the threshold in a same lookup table are omitted and only an intermediate significant bit is stored is used, to further reduce storage space occupied by the lookup table, and improve performance of the processor core.

In a possible design, the first index is a bit value that starts from a most significant bit in the input data other than a fixed bit and whose bit width is a first bit width, and the second index is a bit value that starts from a most significant bit in the input data other than the first index and whose bit width is a second bit width.

In this design, only the data bit in the input data participates in polynomial calculation, and a bit width of the polynomial calculation is small, so that hardware overheads can be reduced.

In a possible design, if an input variable of the objective function is floating-point data, that the processor core obtains the input data of the objective function through the input interface includes: The processor core obtains the floating-point data through the input interface. The processor core splits the floating-point data based on a feature of the objective function to obtain a sign bit, an exponential value, and the input data of the objective function.

In a possible design, that the processor core performs polynomial calculation based on the data bit and the polynomial coefficient to obtain the output data of the objective function includes: The processor core performs polynomial calculation based on the data bit and the polynomial coefficient to obtain a calculation result of the objective function. The processor core processes the calculation result, the sign bit, and the exponential value based on the feature of the objective function to obtain the output data of the objective function.

In this design, the data processing method provided in this embodiment of this application also supports a calculation process of the objective function for the floating-point data. Before the polynomial coefficient is determined, floating-point preprocessing is performed, to be specific, a floating-point number is split to obtain the sign bit, the exponential value, and the input data. Then floating-point post-processing is performed on the calculation result of the objective function, to be specific, the calculation result, the sign bit, and the exponential value are combined to obtain the output data of the objective function.

According to a second aspect, an embodiment of this application provides a data processing apparatus. The data processing apparatus includes a processor core, an input interface, and an output interface. The input interface is configured to obtain input data of an objective function, where the objective function includes a plurality of first segment ranges, each first segment range includes a plurality of second segment ranges, the plurality of second segment ranges are in a one-to-one correspondence with a plurality of polynomial coefficients, the input data includes a first index, a second index, and a data bit, the first index corresponds to a first segment range to which the data bit belongs, the second index corresponds to a second segment range to which the data bit belongs, and a bit width of the second index is related to a slope of the objective function in the first segment range. The processor core is configured to determine, based on the first index and the second index, a polynomial coefficient corresponding to the input data. The processor core is further configured to perform polynomial calculation based on the data bit and the polynomial coefficient to obtain output data of the objective function. The output interface is used to output the output data of the objective function.

In a possible design, the processor core is specifically configured to: determine, based on the first index, a lookup table whose lookup table identifier corresponds to the first index, where the lookup table stores a correspondence between a second segment range and a polynomial coefficient; and determine, based on the second index, a polynomial coefficient that is in the lookup table and that corresponds to the second segment range indicated by the second index, and determine the polynomial coefficient as the polynomial coefficient corresponding to the data bit.

In a possible design, the polynomial coefficient includes a most significant field and a least significant field. If most significant fields of a plurality of polynomial coefficients are the same, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a least significant field of the polynomial coefficient is stored.

In a possible design, the polynomial coefficient includes a most significant field and a least significant field. If a difference between least significant fields of a plurality of polynomial coefficients is less than a threshold, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a most significant field of the polynomial coefficient is stored.

In a possible design, the polynomial coefficient includes a most significant field, an intermediate significant field, and a least significant field. If most significant fields of a plurality of polynomial coefficients are the same and a difference between least significant fields of the plurality of polynomial coefficients is less than a threshold, when the lookup table stores a first polynomial coefficient of the plurality of polynomial coefficients, a most significant field, an intermediate significant field, and a least significant field of the first polynomial coefficient are stored, and when the lookup table stores a polynomial coefficient of the plurality of polynomial coefficients other than the first polynomial coefficient, an intermediate significant field of the polynomial coefficient is stored.

In a possible design, the first index is a bit value that starts from a most significant bit in the input data other than a fixed bit and whose bit width is a first bit width, and the second index is a bit value that starts from a most significant bit in the input data other than the first index and whose bit width is a second bit width.

In a possible design, if an input variable of the objective function is floating-point data, the processor core is specifically configured to: obtain the floating-point data through the input interface; and split the floating-point data based on a feature of the objective function to obtain a sign bit, an exponential value, and the input data of the objective function.

In a possible design, the processor core is specifically configured to: perform polynomial calculation based on the data bit and the polynomial coefficient to obtain a calculation result of the objective function; and process the calculation result, the sign bit, and the exponential value based on the feature of the objective function to obtain the output data of the objective function.

For beneficial effects of the second aspect, refer to the descriptions of the first aspect.

According to a third aspect, an embodiment of this application provides a chip. The chip includes a data processing apparatus and a memory. The data processing apparatus is configured to read and execute program instructions stored in the memory, to implement the method according to the first aspect.

According to a fourth aspect, an embodiment of this application provides a computer-readable storage medium, storing computer instructions. When the computer instructions are run on an electronic device, the electronic device is enabled to perform the data processing method according to any one of the possible implementations of the first aspect.

According to a fifth aspect, an embodiment of this application provides a computer program product. When the computer program product is run on a computer or a processor, the computer or the processor is enabled to perform the data processing method according to any one of the first aspect or the possible implementations thereof.

It can be understood that the data processing apparatus, the chip, the computer-readable storage medium, the computer program product, or the like provided above may be used in a corresponding method provided above. Therefore, for beneficial effects that can be achieved by the data processing apparatus, the chip, the computer-readable storage medium, the computer program product, or the like, refer to beneficial effects of the corresponding method. Details are not described herein again.

These aspects or other aspects in this application are more concise and comprehensible in the following descriptions.

### BRIEF DESCRIPTION OF DRAWINGS

FIG. 1A and FIG. 1B are diagrams of segmentation in an error-equalized polynomial approximation method and a uniform piecewise polynomial approximation method according to an embodiment of this application;
FIG. 2 is a diagram of a hardware architecture to which an error-equalized polynomial approximation method is applied according to an embodiment of this application;
FIG. 3 is a flowchart of application of a uniform piecewise polynomial approximation method according to an embodiment of this application;
FIG. 4 is a diagram of a structure of a data processing apparatus according to an embodiment of this application;
FIG. 5 is a flowchart of a data processing method according to an embodiment of this application;
FIG. 6 is a diagram of a structure of a lookup table according to an embodiment of this application;
FIG. 7 is a diagram of a processing flow of an objective function according to an embodiment of this application;
FIG. 8 is a diagram of a processing flow of another objective function according to an embodiment of this application; and
FIG. 9 is a diagram of a processing flow of still another objective function according to an embodiment of this application.

### DESCRIPTION OF EMBODIMENTS

For ease of understanding, some concepts related to embodiments of this application are described as examples for reference. Details are as follows.

Floating-point (floating point, FP) data: The Institute of Electrical and Electronics Engineers (institute of electrical and electronics engineers, IEEE) defines IEEE 754 as a binary floating-point arithmetic standard, which defines floating-point data representation methods such as double-precision FP64, single-precision FP32, and half-precision FP16. For FP64 data, a sign field includes 1 bit, an exponent field includes 11 bits, and a mantissa field includes 52 bits. For FP32 data, a sign field includes 1 bit, an exponent field includes 8 bits, and a mantissa field includes 23 bits. For FP16 data, a sign field includes 1 bit, an exponent field includes 5 bits, and a mantissa field includes 10 bits.

Scalar unit: A circuit for scalar computing is referred to as a scalar unit. A scalar is also referred to as a scalar quantity, and has only a magnitude but no direction. Scalar computing is mainly used for general-purpose computing. In an execution unit (execution unit, EXU) part of a multi-stage pipeline of a central processing unit (central processing unit, CPU) and a scalar computing part of another processor with a similar function, an arithmetic logic unit (arithmetic logic unit, ALU) based on a floating-point data format may be embedded.

Vector unit: a compute unit that is specially designed for vector computing and that has a specific degree of parallelism, for example, a single instruction multiple data (single instruction multiple data, SIMD) processor. A vector is also referred to as a vector quantity, and is usually a one-dimensional array with a length greater than 1. The vector unit is mainly used in the fields of high-performance computing (high-performance computing, HPC), AI machine learning, and the like, including linear programming, Fourier transform, filter computing, and solving of mathematical problems such as linear algebra, partial differential equations, and integrals. In a vector computing acceleration unit or a vector processor, an arithmetic execution unit (vector unit) based on a floating-point data format may be embedded.

The following describes the technical solutions in embodiments of this application with reference to the accompanying drawings in embodiments of this application. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" used below are merely intended for description, and shall not be understood as an indication or implication of relative importance or an implicit indication of a quantity of indicated technical features. Therefore, a feature defined by "first" or "second" may explicitly or implicitly include one or more features. In the descriptions of embodiments, "a plurality of" means two or more, unless otherwise specified.

Currently, a nonlinear characteristic of an activation function in a neural network affects performance of a processor. Therefore, many studies are devoted to efficient approximation of a nonlinear function. The nonlinear activation function may include a sigmoid function, a tanh function, a softmax function, a ReLU function, an ELU function, and a PReLU function. The nonlinear function may be implemented through an iteration method or piecewise polynomial approximation. For example, the iteration method may include the Newton's method of iteration and a coordinate rotation digital computer (coordinate rotation digital computer, CORDIC) method. However, in the iteration method, a long delay is needed for achieving target precision of the nonlinear function. The piecewise polynomial approximation has an advantage in terms of a delay, and is more suitable for a current AI processor with a high requirement for real-time processing performance.

In the piecewise polynomial approximation method, an objective function is divided into several segments, each segment corresponds to a polynomial, and the polynomial may be of any order, for example, a first-order polynomial y=a×x+b and a second-order polynomial y=a×x2+b×x+c, where x is an input variable, y is an output variable, and a, b, and c are polynomial coefficients. In the method, after software determines segment ranges and polynomial coefficients, a polynomial coefficient of each segment is stored in hardware by using a lookup table (lookup table, LUT), a polynomial coefficient of a segment corresponding to the input variable is determined based on a value of the input variable, and then polynomial calculation is performed by a multiplication and addition unit to obtain a final approximation result.

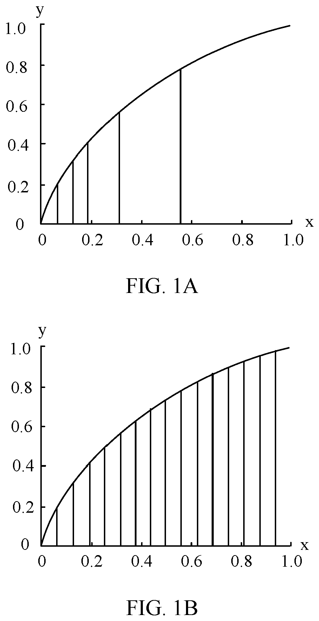

Specifically, the piecewise polynomial approximation may be classified into error-equalized polynomial approximation and uniform piecewise polynomial approximation. FIG. 1A is a diagram of segmentation in the error-equalized polynomial approximation method, and FIG. 1B is a diagram of segmentation in the uniform piecewise polynomial approximation method. In the error-equalized polynomial approximation, unequal-length segments are used to fit an objective function, so that errors of the segments are the same. An advantage of the error-equalized polynomial approximation lies is that a quantity of segments can be minimized through a piecewise algorithm, to reduce entries (entry) of a lookup table for storing polynomial coefficients. However, in the error-equalized polynomial approximation, an additional comparator is needed for obtaining a segment index of an input variable. In the uniform piecewise polynomial approximation, an objective function is divided into equal-length segments, and a most significant bit of an input variable is directly used as an index to search for a polynomial coefficient stored in a lookup table. However, in the uniform piecewise polynomial approximation, a quantity of segments increases with an increase in target precision.

The following further describes the error-equalized polynomial approximation and the uniform piecewise polynomial approximation.

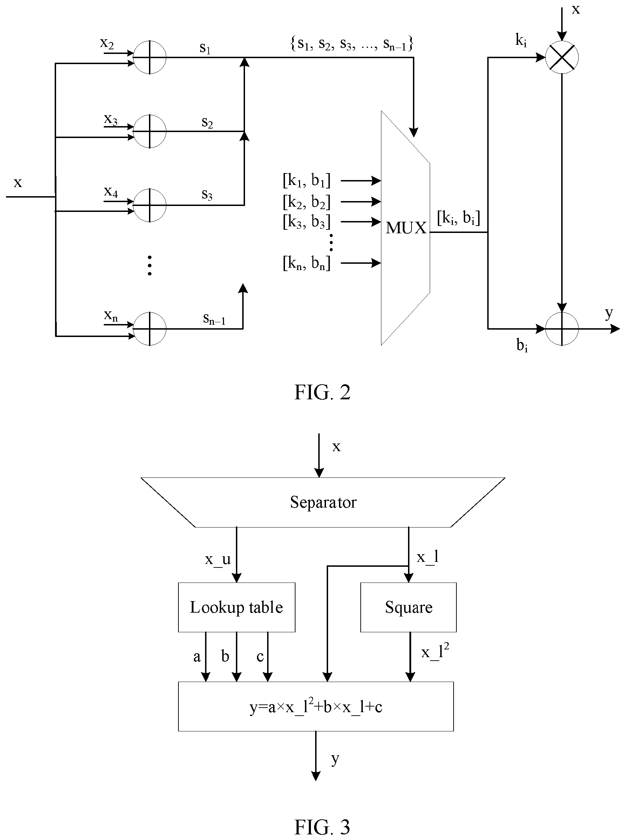

FIG. 2 is a diagram of a hardware architecture to which an error-equalized polynomial approximation method is applied according to an embodiment of this application. In the error-equalized polynomial approximation method, an objective function is divided into several segments through a piecewise algorithm, to ensure that maximum absolute value errors between original function values and polynomial approximation values in all the segments are the same, and a range and a polynomial coefficient of each segment are obtained. This can achieve a minimum quantity of segments at target precision. During hardware implementation, a lookup table is used to store polynomial coefficients of segments, and a segment index of an input variable is obtained by a group of parallel comparators. Start points of the segments are x₂, x₃, x₄, ..., and xₙ. A start point of a segment is also an end point of a previous segment. To be specific, x₃ is an end point of a 1^{st} segment, and is also a start point of a 2^{nd} segment. FIG. 2 does not show an end point of a last segment. The input variable x needs to be compared with the start points to obtain a segment index of the input variable x. The index may be represented as {S₁, S₂, ..., Sₙ₋₁}, where S₁ a result of comparison between x and x₂, S₂ is a result of comparison between x and x₃, and Sₙ₋₁ is a result of comparison between x and xₙ. A multiplexer determines a corresponding polynomial coefficient [kᵢ, bᵢ] from a plurality of polynomial coefficients in the lookup table based on the segment index, where the lookup table may store n polynomial coefficients, for example, [k₁, b₁], [k₂, b₂], [k₃, b₃], ..., and [kₙ, bₙ]. Then a multiplication and addition operation is performed on the input variable x and the polynomial coefficient [kᵢ, bᵢ] to obtain a value of y.

However, due to non-uniform segmentation, a group of comparators are needed for obtaining the segment index, leading to high hardware overheads. In addition, the input variable x participates in polynomial calculation at a full bit width, and a bit width of the multiplication and addition operation is large, also leading to high hardware overheads.

FIG. 3 is a flowchart of application of a uniform piecewise polynomial approximation method according to an embodiment of this application. In the uniform piecewise polynomial approximation method, an objective function is divided into several equal-length segments, and polynomial approximation is performed on each segment, to obtain a polynomial system through a software algorithm. During hardware implementation, the polynomial coefficients are stored in a lookup table, and a most significant bit of an input variable x is used as an index to obtain a polynomial coefficient of a corresponding segment. Finally, a polynomial operation is performed by a multiplication and addition unit to obtain a final approximation result y.

A process includes: The input variable x is input to a separator (separator) to obtain a most significant index part (x_u) and a least significant data part (x_l). Polynomial coefficients, for example, a, b, and c, stored in the lookup table are determined based on the most significant index part, where a is a coefficient of x², b is a coefficient of x, and c is a constant. In addition, the least significant data part is further squared (square) to obtain x_l². Then the least significant data part (x_l), the square of the least significant data part (x_l²), and the polynomial coefficients (a, b, and c) are substituted into a second-order polynomial (y=a×x_l²+b×x_l+c) for a polynomial operation, to obtain an approximation result y corresponding to the input variable x.

However, because a change trend of the objective function varies in different input ranges, a large quantity of segments are needed in a sharply changing part to meet target precision, and only a few segments are needed in a slowly changing part to meet the target precision. According to characteristics of the uniform piecewise polynomial approximation, the most significant bit of the input variable is directly used as the segment index. Consequently, an excessively large quantity of unnecessary segments are used in the slowly charging part of the objective function, increasing overheads of the lookup table and leading to high area overheads.

In view of this, embodiments of this application provide a data processing method. In the method, secondary indexing is used. A processor core first determines, based on a first index, a first segment range to which a data bit belongs, where the first segment range may be understood as a coarse-grained segment. Then the processor core determines, based on a second index, a second segment range to which the data bit belongs, where the second segment range may be understood as a fine-grained segment. In addition, a bit width of the second index is related to a slope of an objective function in the first segment range. If the slope of the objective function in the first segment range is large, a second index with a large bit width may be used. If the slope of the objective function in the first segment range is small, a second index with a small bit width may be used. In this way, a quantity of segment ranges of the objective function can be reduced, to reduce storage space used to store a polynomial coefficient, and improve performance of the processor core. In addition, in the method provided in embodiments of this application, uniform segmentation is performed, and no comparator needs to be used to obtain a segment range, so that design costs and a circuit area are further reduced.

For ease of understanding, the following first describes a data processing apparatus to which the data processing method provided in embodiments of this application is applied. In the foregoing scenario, the data processing method and apparatus in this application may be used in different systems or devices, for example, used in an execution device. The execution device may be a terminal, for example, a mobile phone terminal, a tablet computer, a notebook computer, an augmented reality (augmented reality, AR) device, a virtual reality (virtual reality, VR) device, or a vehicle-mounted terminal, or may be a server cluster. The data processing method provided in this application may be applied to function computing-related scenarios such as a central processing unit, a graphics processing unit (graphics processing unit, GPU), a neural processor unit (neural processor unit, NPU), high-performance computing, and AI in the execution device, for example, a scalar unit and a vector unit.

Specifically, the data processing method may be applied to a division operation, a square root operation, and the like that are performed by the central processing unit on fixed-point data and floating-point data, or may be applied to a logarithmic operation, an exponential operation, a square root operation, a trigonometric function operation, a reciprocal operation, a square root reciprocal operation, and the like that are performed by the graphics processing unit on floating-point data, or may be applied to a logarithmic operation, an exponential operation, a square root operation, a division operation, a reciprocal operation, and the like that are performed by the neural processor unit on floating-point data.

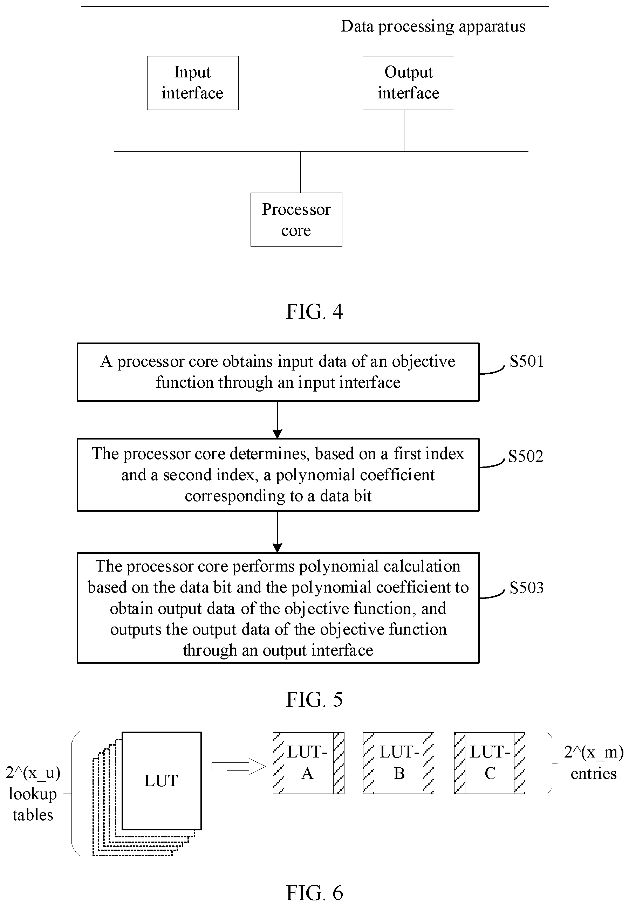

In some embodiments, the data processing apparatus provided in this application may be a chip. For example, the chip is a system-on-a-chip (system-on-a-chip, SoC). FIG. 4 is a diagram of a structure of a data processing apparatus according to an embodiment of this application. The data processing apparatus may include a processor core, an input (input) interface, and an output (output) interface. The data processing apparatus may include one processor core, or the data processing apparatus may include a plurality of processor cores. In addition, the data processing apparatus may also include a memory, and the memory may store instructions or data. After loading the data and an application program in the memory, the processor core may process the data, for example, perform polynomial calculation on a data bit and a polynomial coefficient according to embodiments of this application. In addition, in this embodiment of this application, the input interface may be configured to obtain an input variable of an objective function, and the output interface may be configured to output output data of the objective function. In an example, in a neural network system, the output data of the objective function may be used as input data for a next convolution layer.

In addition to the SoC, the chip may alternatively be a field programmable gate array (field programmable gate array, FPGA), an application-specific integrated circuit (application-specific integrated circuit, ASIC), or the like.

The data processing method is applied to the foregoing data processing apparatus. The following describes in detail the data processing method provided in embodiments of this application with reference to the accompanying drawings.

An embodiment of this application provides a data processing method. FIG. 5 is a flowchart of a data processing method according to an embodiment of this application. The method includes the following process.

S501: A processor core obtains input data of an objective function through an input interface. The objective function includes a plurality of first segment ranges. Each first segment range includes a plurality of second segment ranges. The plurality of second segment ranges are in a one-to-one correspondence with a plurality of polynomial coefficients. The input data includes a first index, a second index, and a data bit. The first index corresponds to a first segment range to which the data bit belongs. The second index corresponds to a second segment range to which the data bit belongs. A bit width of the second index is related to a slope of the objective function in the first segment range.

For example, the input data of the objective function may be a scalar or a vector. If the input data of the objective function is a scalar, a polynomial operation may be performed on the input data of the objective function through a scalar unit in the processor core. If the input data of the objective function is a vector, a polynomial operation may be performed on the input data of the objective function through a vector unit in the processor core.

For example, the first segment range may be understood as a coarse-grained segment, the second segment range may be understood as a fine-grained segment, and both the first segment range and the second segment range are obtained through uniform segmentation. In a specific example, it is assumed that the objective function is a tanh function. Because the tanh function is symmetrical, the tanh function may be segmented only on a positive half-axis of an x-axis. Specifically, the first segment range may be [0, 4), [4, 8), [8, 12), ..., [n, n+4). In the first segment range [0, 4), if a slope of the objective function is large, in other words, the objective function is steep, the second segment range may be [0, 1), [1, 2), [2, 3), and [3, 4); or if a slope of the objective function is small, in other words, the objective function is flat, the second segment range may be [0, 2) and [2, 4).

The input data may include the first index (denoted as x_u in this embodiment of this application), the second index (denoted as x_m in this embodiment of this application), and the data bit (denoted as x_l in this embodiment of this application). The first index is a bit value that starts from a most significant bit in the input data other than a fixed bit and whose bit width is a first bit width. The second index is a bit value that starts from a most significant bit in the input data other than the first index and whose bit width is a second bit width. If an input variable is floating-point data, the input data may be (1.a mantissa field), and the fixed bit is 1.

For example, the second bit width is related to the slope of the objective function in the first segment range. A larger second bit width indicates a larger quantity of second segment ranges in the first segment range. A smaller second bit width indicates a smaller quantity of second segment ranges in the first segment range. In this way, a quantity of segment ranges of the objective function can be reduced. In addition, the second bit width is further related to target precision of the objective function. A larger second bit width indicates higher target precision of the objective function. A smaller second bit width indicates lower target precision of the objective function.

Specifically, for example, the input data is a 23-bit binary stream, and it is assumed that the input data is 23'b01011010010010000000010. In a uniform piecewise polynomial approximation method, primary indexing is used in the method. In this case, a polynomial operation may be performed by using 8 most significant bits as an index and remaining 15 bits as data bits. Therefore, there may be 2^8=256 segment ranges in the method.

In this embodiment of this application, the first bit width may be 3 bits, and the second bit width may be 3 bits, 4 bits, or 5 bits. The first index may be a bit value that starts from a most significant bit and whose bit width is 3 bits. In this case, the first index may be 3'b010. If the second bit width is 3 bits, the second index may be 3'b110. In this case, data bits are 17'b10010010000000010. If the second bit width is 4 bits, the second index may be 4'b1101. In this case, data bits are 16'b0010010000000010. If the second bit width is 5 bits, the second index may be 5'b11010. In this case, data bits are 15'b010010000000010.

Therefore, in this embodiment of this application, 2^3=8 first segment ranges are included. Assuming that second bit widths corresponding to the eight first segment ranges are 5, 4, 3, 3, 3, 3, 3, and 3, a 1^{st} first segment range is divided into 2^5=32 second segment ranges, a 2^{nd} first segment range is divided into 2^4=16 second segment ranges, and a 3rd first segment range to an 8^{th} first segment range each are divided into 2^3=8 second segment ranges. Therefore, the eight first segment ranges are divided into a total of 32+16+8+8+8+8+8+8=96 second segment ranges. In comparison with the 256 segment ranges used in the uniform piecewise polynomial approximation method, a quantity of segments in the data processing method used in this embodiment of this application is greatly reduced.

S502: The processor core determines, based on the first index and the second index, a polynomial coefficient corresponding to the data bit.

For example, the processor core first determines, based on the first index, a first segment range that is in a lookup table and to which the polynomial coefficient belongs, and then determines a second segment range based on the second index, to determine a polynomial coefficient corresponding to the second segment range. If the objective function is a first-order polynomial y=a×x+b, polynomial coefficients are a and b. If the objective function is a second-order polynomial y=a×x²+b×x+c, polynomial coefficients are a, b, and c. It can be understood that, if the target precision of the objective function is high, the objective function may alternatively be a third-order polynomial or a higher-order polynomial.

Optionally, S502 may include: The processor core determines, based on the first index, a lookup table whose lookup table identifier corresponds to the first index, where the lookup table stores a correspondence between a second segment range and a polynomial coefficient. The processor core determines, based on the first index, a polynomial coefficient that is in the lookup table and that corresponds to the second segment range indicated by the second index, and determines the polynomial coefficient as the polynomial coefficient corresponding to the data bit.

For example, FIG. 6 is a diagram of a structure of a lookup table according to an embodiment of this application. FIG. 6 shows 2^(x_u) lookup tables. Assuming that the first index is 3 bits, 2^3=8 lookup tables may be included, and lookup table identifiers may be 3'b000, 3'b001, 3'b010, 3'b011, 3'b100, 3'b101, 3'b110, and 3'b111. FIG. 6 further specifically shows three lookup tables, for example, an LUT-A, an LUT-B, and an LUT-C. Each LUT stores 2^(x_m) entries, and each entry corresponds to one polynomial coefficient. The processor core first determines an identifier of a lookup table based on the first index, and further determines an entry in the identifier of the lookup table based on the second index.

S503: The processor core performs polynomial calculation based on the data bit and the polynomial coefficient to obtain output data of the objective function, and outputs the output data of the objective function through an output interface.

For example, because the second bit width of the second index in the input data is variable, before performing polynomial calculation based on the data bit and the polynomial coefficient, the processor core needs to perform an alignment operation on data bits, to ensure that bit widths of the data bits are the same. In a specific example, if data bits are 15'b010010000000010, 2 least significant bits may be added to the data bits to obtain 17'b01001000000001000; or if data bits are 16'b0010010000000010, 1 least significant bit may be added to the data bits to obtain 17'b00100100000000100.

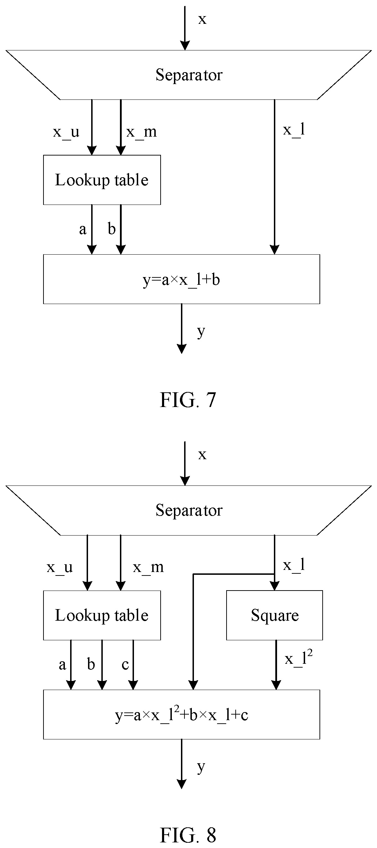

For example, if the objective function is a first-order polynomial y=a×x+b, FIG. 7 is a diagram of a processing flow of an objective function according to an embodiment of this application. Input data x of the objective function is split by a separator (separator) to obtain a first index (x_u), a second index (x_m), and a data bit (x_l). A lookup table is searched based on the first index and the second index to obtain polynomial coefficients a and b. The data bit and the polynomial coefficients are substituted into a first-order polynomial (y=a×x_l+b) for a polynomial operation, to obtain output data y of the objective function.

For example, if the objective function is a second-order polynomial y=a×x²+b×x+c, FIG. 8 is a diagram of a processing flow of another objective function according to an embodiment of this application. Input data x of the objective function is split by a separator to obtain a first index (x_u), a second index (x_m), and a data bit (x_l). A lookup table is searched based on the first index and the second index to obtain polynomial coefficients a, b, and c. The data bit is squared to obtain x_l². The data bit and the polynomial coefficients are substituted into a second-order polynomial (y=a×x_l²+b×x_l+c) for a polynomial operation, to obtain an output result y of the objective function.

Optionally, if an input variable of the objective function is floating-point data, S501 may include: The processor core obtains the floating-point data through the input interface. The processor core splits the floating-point data based on a feature of the objective function to obtain a sign (sign) bit, an exponential value (exponent), and the input data of the objective function.

In addition, S503 may include: The processor core performs polynomial calculation based on the data bit and the polynomial coefficient to obtain a calculation result of the objective function. The processor core further processes the calculation result, the sign bit, and the exponential value based on the feature of the objective function to obtain the output data of the objective function.

For example, if the input data is floating-point data, for example, floating-point data FP32, the input data may be 32'b00111110001011010010010000000010. In this case, the sign bit of the floating-point data is 0, the exponential value is 8'b01111100, and the input data is 23'b01011010010010000000010.

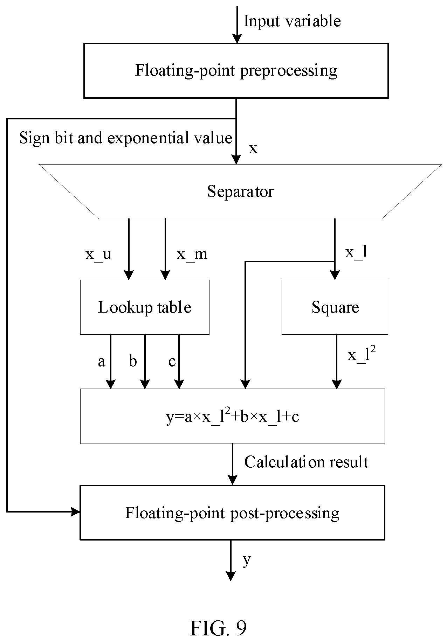

For example, FIG. 9 is a diagram of a processing flow of still another objective function according to an embodiment of this application. It is assumed that the objective function is a second-order polynomial y=a×x²+b×x+c. Floating-point preprocessing is performed on an input variable to obtain a sign bit, an exponential value, and input data x. The input data x is split by a separator to obtain a first index (x_u), a second index (x_m), and a data bit (x_l). A lookup table is searched based on the first index and the second index to obtain polynomial coefficients a, b, and c. The data bit is squared to obtain x_l². A polynomial operation is performed on the data bit and the polynomial coefficients to obtain a calculation result of the objective function. Then floating-point post-processing is performed on the calculation result, the sign bit, and the exponential value to obtain output data y of the objective function.

In a possible example, to achieve the target precision, for a compute unit with a half-precision requirement, a first-order polynomial may be used to fit the objective function in the second segment range, and for a compute unit with a single-precision requirement or a double-precision requirement, a second-order polynomial may be used to fit the objective function in the second segment range.

Optionally, the polynomial coefficient may include a most significant field and a least significant field. If most significant fields of a plurality of polynomial coefficients are the same, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a least significant field of the polynomial coefficient is stored.

In a specific example, a binary stream with 8-bit polynomial coefficients is used as an example. It is assumed that a 1^{st} polynomial coefficient is 8'b10110011, a 2^{nd} polynomial coefficient is 8'b10011110, ..., and an n^{th} polynomial coefficient is 8'b10100100. 2 most significant bits of the polynomial coefficients are the same, and are 2'b10. In this case, when the lookup table stores the n polynomial coefficients, the 2 most significant bits may be omitted. Specifically, when storing the n polynomial coefficients, the lookup table may store the 1^{st} polynomial coefficient as 8'b10110011, the 2^{nd} polynomial coefficient as 6'b011110, ..., and the n^{th} polynomial coefficient as 6'b100100. In this way, storage space occupied by the lookup table can be reduced.

Optionally, the polynomial coefficient may include a most significant field and a least significant field. If a difference between least significant fields of a plurality of polynomial coefficients is less than a threshold, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a most significant field of the polynomial coefficient is stored.

Still refer to the foregoing example. A difference between 2 least significant bits of the 1^{st} polynomial coefficient and 2 least significant bits of the 2^{nd} polynomial coefficient is 2'b01, a difference between the 2 least significant bits of the 1^{st} polynomial coefficient and 2 least significant bits of the n^{th} polynomial coefficient is 2'b11, and a difference between 2 least significant bits of the 2^{nd} polynomial coefficient and the 2 least significant bits of the n^{th} polynomial coefficient is 2'b10. It can be considered that a difference between 2 least significant bits of the n polynomial coefficients meets a preset threshold. In this case, when the lookup table stores the n polynomial coefficients, the 2 least significant bits may be omitted. Specifically, when storing the n polynomial coefficients, the lookup table may store the 1^{st} polynomial coefficient as 8'b10110011, the 2^{nd} polynomial coefficient as 6'b100111, ..., and the n^{th} polynomial coefficient as 6'b101001. In this way, storage space occupied by the lookup table can be reduced.

Optionally, the polynomial coefficient includes a most significant field, an intermediate significant field, and a least significant field. If most significant fields of a plurality of polynomial coefficients are the same and a difference between least significant fields of the plurality of polynomial coefficients is less than a threshold, when the lookup table stores a first polynomial coefficient of the plurality of polynomial coefficients, a most significant field, an intermediate significant field, and a least significant field of the first polynomial coefficient are stored, and when the lookup table stores a polynomial coefficient of the plurality of polynomial coefficients other than the first polynomial coefficient, an intermediate significant field of the polynomial coefficient is stored.

Still refer to the foregoing example. 2 most significant bits of a plurality of polynomial coefficients are the same, a difference between 2 least significant bits of the 1^{st} polynomial coefficient and 2 least significant bits of the 2^{nd} polynomial coefficient is 2'b01, a difference between the 2 least significant bits of the 1^{st} polynomial coefficient and 2 least significant bits of the n^{th} polynomial coefficient is 2'b11, and a difference between 2 least significant bits of the 2^{nd} polynomial coefficient and the 2 least significant bits of the n^{th} polynomial coefficient is 2'b10. It can be considered that a difference between 2 least significant bits of the n polynomial coefficients meets a preset threshold. In this case, when the lookup table stores the n polynomial coefficients, both the 2 most significant bits and the 2 least significant bits may be omitted. Specifically, when storing the n polynomial coefficients, the lookup table may store the 1^{st} polynomial coefficient as 8'b10110011, the 2^{nd} polynomial coefficient as 4'b1001, ..., and the n^{th} polynomial coefficient as 4'b1010. In this way, storage space occupied by the lookup table can be reduced.

In this way, according to the data processing method provided in this embodiment of this application, segment ranges of the objective function can be reduced, to reduce storage space used to store a polynomial coefficient, and improve performance of the processor core. In addition, in this embodiment of this application, no comparator needs to be used to obtain a segment range, so that design costs and a circuit area are further reduced. In addition, when the lookup table stores a polynomial coefficient, a partial storage mode is used, to reduce storage space occupied by the lookup table.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the data processing method in the foregoing embodiments.

It can be understood that, to implement the foregoing functions, the electronic device includes a corresponding hardware module and/or software module for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In this embodiment, the electronic device may be divided into functional modules based on the foregoing method examples. For example, each functional module may be obtained through division based on a corresponding function, or two or more functions may be integrated into one processing module. The integrated module may be implemented in a form of hardware. It should be noted that division into the modules in embodiments is an example, and is merely logical function division. During actual implementation, another division manner may be used.

An embodiment of this application further provides a computer-readable storage medium. The computer-readable storage medium stores computer instructions. When the computer instructions are run on an electronic device, the electronic device is enabled to perform the foregoing related method steps to implement the data processing method in the foregoing embodiments.

An embodiment of this application further provides a computer program product. When the computer program product is run on a computer, the computer is enabled to perform the foregoing related steps to implement the data processing method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the data processing method performed by the electronic device in the foregoing method embodiments.

The electronic device, the computer storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the descriptions of the foregoing implementations, a person skilled in the art may understand that, for ease and brevity of description, division into the foregoing functional modules is merely used as an example for illustration. During actual application, the foregoing functions may be allocated to different functional modules and implemented according to a requirement. In other words, an internal structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division. During actual implementation, another division manner may be used. For example, a plurality of units or components may be combined or integrated into another apparatus, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may be one or more physical units, to be specific, may be located in one place, or may be distributed in a plurality of different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes several instructions for enabling a device (which may be a single-chip microcomputer, a chip, or the like) or a processor (processor) to perform all or some of the steps of the method in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the data processing method is applied to a data processing apparatus, the data processing apparatus comprises a processor core, an input interface, and an output interface, and the method comprises:
obtaining, by the processor core, input data of an objective function through the input interface, wherein the objective function comprises a plurality of first segment ranges, each first segment range comprises a plurality of second segment ranges, the plurality of second segment ranges are in a one-to-one correspondence with a plurality of polynomial coefficients, the input data comprises a first index, a second index, and a data bit, the first index corresponds to the first segment range to which the data bit belongs, the second index corresponds to the second segment range to which the data bit belongs, and a bit width of the second index is related to a slope of the objective function in the first segment range;
determining, by the processor core based on the first index and the second index, a polynomial coefficient corresponding to the data bit; and
performing, by the processor core, polynomial calculation based on the data bit and the polynomial coefficient to obtain output data of the objective function, and outputting the output data of the objective function through the output interface.

2. The method according to claim 1, wherein determining, by the processor core based on the first index and the second index of the input data of the objective function, the polynomial coefficient corresponding to the data bit comprises:
determining, by the processor core based on the first index, a lookup table whose lookup table identifier corresponds to the first index, wherein the lookup table stores a correspondence between the second segment range and the polynomial coefficient; and
determining, by the processor core based on the second index, a polynomial coefficient that is in the lookup table and that corresponds to the second segment range indicated by the second index, and determining the polynomial coefficient as the polynomial coefficient corresponding to the data bit.

3. The method according to claim 2, wherein the polynomial coefficient comprises a most significant field and a least significant field, wherein if most significant fields of a plurality of polynomial coefficients are the same, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a least significant field of the polynomial coefficient is stored.

4. The method according to claim 2, wherein the polynomial coefficient comprises a most significant field and a least significant field, wherein if a difference between least significant fields of a plurality of polynomial coefficients is less than a threshold, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a most significant field of the polynomial coefficient is stored.

5. The method according to claim 2, wherein the polynomial coefficient comprises a most significant field, an intermediate significant field, and a least significant field, wherein if most significant fields of a plurality of polynomial coefficients are the same and a difference between least significant fields of the plurality of polynomial coefficients is less than a threshold, when the lookup table stores a first polynomial coefficient of the plurality of polynomial coefficients, a most significant field, an intermediate significant field, and a least significant field of the first polynomial coefficient are stored, and when the lookup table stores a polynomial coefficient of the plurality of polynomial coefficients other than the first polynomial coefficient, an intermediate significant field of the polynomial coefficient is stored.

6. The method according to any one of claims 1 to 5, wherein the first index is a bit value that starts from a most significant bit in the input data other than a fixed bit and whose bit width is a first bit width, and the second index is a bit value that starts from a most significant bit in the input data other than the first index and whose bit width is a second bit width.

7. The method according to claim 1, wherein if an input variable of the objective function is floating-point data, obtaining, by the processor core, the input data of the objective function through the input interface comprises:
obtaining, by the processor core, the floating-point data through the input interface; and
splitting, by the processor core, the floating-point data based on a feature of the objective function to obtain a sign bit, an exponential value, and the input data of the objective function.

8. The method according to claim 7, wherein performing, by the processor core, polynomial calculation based on the data bit and the polynomial coefficient to obtain the output data of the objective function comprises:
performing, by the processor core, polynomial calculation based on the data bit and the polynomial coefficient to obtain a calculation result of the objective function; and
processing, by the processor core, the calculation result, the sign bit, and the exponential value based on the feature of the objective function to obtain the output data of the objective function.

9. A data processing apparatus, wherein the data processing apparatus comprises a processor core, an input interface, and an output interface, wherein
the input interface is configured to obtain input data of an objective function, wherein the objective function comprises a plurality of first segment ranges, each first segment range comprises a plurality of second segment ranges, the plurality of second segment ranges are in a one-to-one correspondence with a plurality of polynomial coefficients, the input data comprises a first index, a second index, and a data bit, the first index corresponds to the first segment range to which the data bit belongs, the second index corresponds to the second segment range to which the data bit belongs, and a bit width of the second index is related to a slope of the objective function in the first segment range;
the processor core is configured to determine, based on the first index and the second index, a polynomial coefficient corresponding to the data bit;
the processor core is further configured to perform polynomial calculation based on the data bit and the polynomial coefficient to obtain output data of the objective function; and
the output interface is configured to output the output data of the objective function.

10. The apparatus according to claim 9, wherein the processor core is specifically configured to: determine, based on the first index, a lookup table whose lookup table identifier corresponds to the first index, wherein the lookup table stores a correspondence between the second segment range and a polynomial coefficient; and
determine, based on the second index, a polynomial coefficient that is in the lookup table and that corresponds to the second segment range indicated by the second index, and determine the polynomial coefficient as the polynomial coefficient corresponding to the data bit.

11. The apparatus according to claim 10, wherein the polynomial coefficient comprises a most significant field and a least significant field, wherein if most significant fields of a plurality of polynomial coefficients are the same, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a least significant field of the polynomial coefficient is stored.

12. The apparatus according to claim 10, wherein the polynomial coefficient comprises a most significant field and a least significant field, wherein if a difference between least significant fields of a plurality of polynomial coefficients is less than a threshold, when the lookup table stores a first polynomial coefficient of the plurality of polynomial coefficients, a most significant field and a least significant field of the first polynomial coefficient are stored, and when the lookup table stores a polynomial coefficient of the plurality of polynomial coefficients other than the first polynomial coefficient, a most significant field of the polynomial coefficient is stored.

13. The apparatus according to claim 10, wherein the polynomial coefficient comprises a most significant field, an intermediate significant field, and a least significant field, wherein if most significant fields of a plurality of polynomial coefficients are the same and a difference between least significant fields of the plurality of polynomial coefficients is less than a threshold, when the lookup table stores a first polynomial coefficient of the plurality of polynomial coefficients, a most significant field, an intermediate significant field, and a least significant field of the first polynomial coefficient are stored, and when the lookup table stores a polynomial coefficient of the plurality of polynomial coefficients other than the first polynomial coefficient, an intermediate significant field of the polynomial coefficient is stored.

14. The apparatus according to any one of claims 9 to 13, wherein the first index is a bit value that starts from a most significant bit in the input data other than a fixed bit and whose bit width is a first bit width, and the second index is a bit value that starts from a most significant bit in the input data other than the first index and whose bit width is a second bit width.

15. The apparatus according to claim 9, wherein if an input variable of the objective function is floating-point data, the processor core is specifically configured to: obtain the floating-point data through the input interface; and split the floating-point data based on a feature of the objective function to obtain a sign bit, an exponential value, and the input data of the objective function.

16. The apparatus according to claim 15, wherein the processor core is specifically configured to: perform polynomial calculation based on the data bit and the polynomial coefficient to obtain a calculation result of the objective function; and process the calculation result, the sign bit, and the exponential value based on the feature of the objective function to obtain the output data of the objective function.

17. A chip, wherein the chip comprises a data processing apparatus and a memory, and the data processing apparatus is configured to read and execute program instructions stored in the memory, to implement the method according to any one of claims 1 to 8.

18. A computer-readable storage medium, comprising computer instructions, wherein when the computer instructions are run on an electronic device, the electronic device is enabled to perform the method according to any one of claims 1 to 8.
